# EUROPÄISCHE PATENTSCHRIFT

(11) **EP 3 419 920 B1**
(45) Veröffentlichungstag und Bekanntmachung des Hinweises auf die Patenterteilung: **24.04.2024**
(21) Anmeldenummer: 17706249.4
(22) Anmeldetag: 21.02.2017
(51) Int. Cl.: B65G 47/44, B65G 11/16, B65G 11/20, B65G 15/08

(54) **FÖRDERANLAGE ZUM FÖRDERN VON FÖRDERGUT**
CONVEYOR SYSTEM FOR CONVEYING MATERIALS TO BE CONVEYED
INSTALLATION DE TRANSPORT DESTINÉE À TRANSPORTER DES PRODUITS À TRANSPORTER

(30) Priorität: 25.02.2016 DE 102016203002
(43) Veröffentlichungstag der Anmeldung: 02.01.2019
(73) Patentinhaber: Koch Solutions GmbH, 66787 Wadgassen (DE)
(72) Erfinder: MICHAELI, Gerhard, 66386 Sankt Ingbert (DE); DR., WOLPERS, Franz, 66459 Kirkel (DE)
(74) Vertreter: Patentanwälte Bernhardt / Wolff Partnerschaft mbB
(86) Internationale Anmeldenummer: PCT/EP2017/053852
(87) Internationale Veröffentlichungsnummer: WO 2017/144434

(56) Entgegenhaltungen:
- GB-A- 873 717
- GB-A- 2 094 741
- US-A1- 2004 182 673
- US-A1- 2008 283 368

## Beschreibung

Die Erfindung betrifft eine Förderanlage zum Fördern von Fördergut, sowie ein Verfahren zum Betreiben einer Förderanlage.

Förderanlagen werden üblicherweise für den Transport von Fördergut, wie beispielsweise Schüttgut, Gestein oder Sand aus einem Tagebau verwendet. Zur Förderung von Materialien über eine steile Strecke oder bei der Förderung von Gefahrengut werden Schlauchförderer eingesetzt, wobei der Fördergurt zu einem Schlauch geformt wird und das Fördergut umschließt.

Aus der DE 40 28 469 A1 geht eine Aufgabevorrichtung zur Aufgabe von Fördergut auf ein Förderband hervor, wobei das Förderband aus seiner Form als umfangsgemäß geschlossener Förderschlauch zur Befüllung in eine U-Form geöffnet wird und nach der Befüllung wieder zu einem umfangsgemäß geschlossenen Förderschlauch geformt wird. Damit eignet sich diese Aufgabevorrichtung, um an einer beliebigen, verschiebbaren Position entlang einer Strecke beladen zu werden. Das Förderband soll dabei so vorgespannt, dass nach der U-förmigen Öffnung des Förderbandes dieses sich von selbst zu einem Förderschlauch formt. Der geschlossene Förderschlauch wird in eine U-Form geöffnet, indem Spreizelemente der Bandanlage an der zum Fördergut weisenden Innenfläche des Förderbandes eingreifen und die Innenfläche aufspannen. Das Fördergut wird mittels eines Trichters von der nach oben offenen Seite des U-förmigen Förderbandes eingegeben. Anschließend schließt sich das Förderband vollumfänglich zu dem Förderschlauch. JP S61 33406 A offenbart die Oberbegriffe der Ansprüche 1, 2, 11 und 12.

Ein Problem einer derartigen Materialaufgabe auf ein Förderband, das zu einem Förderschlauch geformt wird, liegt darin, dass das Fördergut kleine Materialteile und große Materialteile aufweist. Die großen Materialteile müssen dabei geeignet behandelt werden, sodass die Möglichkeit besteht, das Förderband zu einem Förderschlauch zu formen, ohne dass es zu Kollisionen des Förderbandes mit den großen Materialteilen kommt. Große Materialteile können dabei länglich ausgebildet sein, insbesondere wenn diese mit einem Kreiselbrecher bearbeitet wurden. Diese sogenannten "Fische" sind länglich ausgebildete große Materialteile, die mit einer Hauptlängsrichtung Abmessungen erreichen können, die größer sind als der Durchmesser des geformten Förderschlauches. Zusätzlich führen große Materialteile zu erheblichen Belastungen des Förderbandes und der Bandführungseinrichtungen, sodass diese sogar Beschädigungen erfahren, wenn die großen Materialteile unmittelbar auf das Förderband gelangen. Eine möglichst geringe Belastung des Förderbandes ist jedoch wünschenswert.

Davon ausgehend ist es Aufgabe der vorliegenden Erfindung, eine Fördereinrichtung bereitzustellen, die derart ausgebildet ist, dass hohe Belastungen des Förderbandes und der Bandführungseinrichtung verhindert und Beschädigungen minimiert werden.

Diese Aufgabe wird erfindungsgemäß durch eine Förderbandanlage mit den Merkmalen des unabhängigen Vorrichtungsanspruchs 1 und des unabhängigen Vorrichtungsanspruchs 2 sowie dem unabhängigen Verfahrensanspruch 11 und dem unabhängigen Verfahrensanspruch 12 gelöst. Vorteilhafte Weiterbildungen ergeben sich aus den abhängigen Ansprüchen.

Eine Förderanlage zum Fördern von Fördergut umfasst nach einem ersten Aspekt ein Förderband, eine Aufgabevorrichtung zur Aufgabe von Fördergut auf das Förderband, eine Bandanlage, in der das Förderband geführt ist, wobei die Bandanlage eine erste Bandformeinrichtung aufweist, mit der das Förderband bis zum Erreichen der Aufgabevorrichtung aus einer im Wesentlichen flachen Form in eine U-Form geformt wird, sodass das Fördergut in die U-Form einbringbar ist, und wobei die Bandanlage eine zweite Bandformeinrichtung aufweist, mit der das Förderband in Förderrichtung anschließend zu der Aufgabevorrichtung zu einem geschlossenen Schlauch formbar ist. Eine im Wesentlichen flache Form des Förderbandes bedeutet vorliegend, dass das von einer Bandumlenktrommel ablaufende Förderband geringe Wölbungen aufweisen kann. Dies liegt zum einen daran, dass das Förderband von der Bandumlenktrommel kommend einen fließenden Verlauf zur ersten Bandformeinrichtung aufweist. Zum anderen daran, dass der Mittenbereich der Bandumlenktrommel einen geringfügig anderen Durchmesser als der Randbereich haben kann. Vorzugsweise ist das Förderband vollständig flach, wenn es von der Bandumlenktrommel umgelenkt und zur ersten Bandformeinrichtung geführt wird. Die Aufgabevorrichtung weist zudem einen Auffangbereich auf, der derart ausgebildet ist, dass sich Fördergut in diesem anlagert und eine Prallfläche ausbildet, auf die das Fördergut aufgebbar ist. Der Auffangbereich kann auch eine Prallfläche sein, die nicht aus Fördergut besteht. Die Bandanlage umfasst eine Mehrzahl von in Förderrichtung hintereinander angeordneten Bandformeinrichtungen, die derart ausgebildet sind, dass das darin geführte Förderband zumindest mittels der ersten Bandformeinrichtung zuerst zu einer U-Form und anschließend zumindest mittels der zweiten Bandformeinrichtung zu einem geschlossenen Schlauch formbar ist. Jede Bandformeinrichtung weist zumindest drei Rollen auf, die relativ zueinander derart angeordnet sind, dass das darauf geführte Förderband eine U-Form oder eine Schlauchform aufweist. Die U-Form weist in Förderrichtung einen zur Förderrichtung konstanten Querschnitt auf.

Die Erfindung sieht daher vor, dass ausschließlich die an der zum Fördergut abgewandten Fläche des Förderbandes angeordneten Rollen das Förderband in die U-Form bzw. die Schlauchform formen. Durch die eingangs im Wesentlichen flache Form des Förderbandes weist das Förderband keine Vorspannung auf, die einen Eingriff von Spreizelementen, beispielsweise Spreizrollen, an der zum Fördergut weisenden Innenfläche des Förderbandes notwendig macht. Diese Ausführungsform der Förderanlage stellt daher wegen der wenigen benötigten Komponenten eine kostengünstige und wartungsarme Lösung der Aufgabe dar. Bei dieser Ausführungsform der Förderanlage muss der Gurt nicht so biegsam oder krümmungserzeugend sein, dass bei der U-förmigen Krümmung des mittleren Bereiches die beiden Randbereiche von selbst eingeschlagen liegen.

Nach der Erfindung weist die zweite Bandformeinrichtung der Förderanlage mindestens drei Rollen, bevorzugt vier bis fünf Rollen, besonders bevorzugt sechs Rollen auf.

Die Aufgabevorrichtung ist vorzugsweise stationär angebracht und oberhalb des Förderbandes angeordnet, sodass Fördergut mittels der Aufgabevorrichtung auf das U-förmige Förderband aufgebbar ist. In dem Bereich in Förderrichtung anschließend zu der Aufgabevorrichtung weist das Förderband zumindest bereichsweise eine geschlossene, schlauchförmige Gestalt auf, wobei das Fördergut innerhalb des schlauchförmigen Förderbandes angeordnet ist und von diesem, insbesondere vollständig, umschlossen ist.

Das Fördergut wird beispielsweise von einer oberhalb des Förderbandes angeordneten Fördereinrichtung mit einem Fördergurt in die Aufgabevorrichtung aufgegeben. Dazu ist die stationäre Aufgabevorrichtung unterhalb des Abwurfendes des Fördergurtes derart angeordnet, dass Fördergut von dem Fördergurt in die Aufgabevorrichtung fällt. Wie bereits erwähnt handelt es sich bei dem Fördergurt beispielsweise um einen um eine Bandumlenktrommel geführten im Wesentlichen flachen Gurt, auf dem das Fördergut aufliegt.

Bei der Aufgabevorrichtung handelt es sich beispielsweise um eine Schurre, die einen Auffangbereich aufweist, der derart ausgebildet ist, dass sich Fördergut in diesem anlagert und eine Prallfläche ausbildet, auf die das Fördergut aufgebbar ist. Die Prallfläche ist vorzugsweise unterhalb des Abwurfendes des Fördergurtes oberhalb des Förderbandes angebracht, sodass Fördergut von dem Abwurfende auf die Prallfläche fällt. Der Auffangbereich ist derart in der Aufgabevorrichtung angeordnet, dass von oben in die Aufgabevorrichtung fallendes Fördergut in den Auffangbereich gelangt und sich in diesem anlagert. Das Fördergut lagert sich in dem Auffangbereich an und bildet eine Prallfläche, die mit Fördergut beaufschlagbar ist. Die Aufgabevorrichtung erstreckt sich insbesondere in Förderrichtung des Förderbandes und weist beispielsweise einen kastenförmigen, oberen Bereich mit einem rechteckigen Querschnitt auf. Vorzugsweise bildet eine sich in Förderrichtung des Förderbandes erstreckende Seite des kastenförmigen Bereichs den Auffangbereich. In dem kastenförmigen Bereich ist beispielsweise eine Öffnung angeordnet, an die sich vorzugsweise zumindest zwei vertikale Wandelemente anschließen, die in Richtung des Förderbandes weisen. Die Aufgabevorrichtung weist beispielsweise eine Mehrzahl von Auffangbereichen auf, die insbesondere derart zueinander angeordnet sind, das sich in den Auffangbereichen angelagertes Fördergut eine Prallfläche ausbildet. Die Prallfläche ist vorzugsweise im Wesentlichen eben ausgebildet.

Gemäß einer unerwarteten Erkenntnis der Erfinder ermöglicht eine Prallfläche aus in der Auffangvorrichtung abgelagertem Fördergut eine optimale Vororientierung des Förderguts, insbesondere länglicher Materialbrocken (Fische). Dabei wird die Ausrichtung der länglichen Materialbrocken im U-förmigen Gurt in Richtung des Förderbandes unterstützt bzw. die Gefahr von zur Förderrichtung des Förderbandes querstehenden Fördergutbrocken reduziert. Unter den länglichen Materialbrocken sind insbesondere die Materialbrocken zu verstehen, die eine Erstreckung aufweisen, die den Durchmesser des geschlossenen, schlauchförmigen Förderbandes übersteigen und somit zu Beschädigungen an dem Förderband führen könnten. Beim Auftreffen der länglichen Materialbrocken auf das Förderband werden diese durch die Fördergeschwindigkeit des Förderbandes in Förderrichtung ausgerichtet, sodass eine Beschädigung des Förderbandes durch quer zur Förderrichtung auf dem Förderband liegenden Materialbrocken zuverlässig vermindert wird. Insbesondere zum Befüllen eines Förderbandes, das anschließend zu einem Schlauch geformt wird, hat sich die Anordnung einer solchen Aufgabevorrichtung als vorteilhaft erwiesen. Die Prallfläche aus in der Auffangvorrichtung abgelagertem Fördergut sorgt des Weiteren für eine Desagglomeration des Förderguts, wobei beim Auftreffen des Förderguts auf die Prallfläche eine Verteilung des Materials über die Prallfläche erreicht wird. Ferner wird durch eine solche Prallfläche der Verschleiß der Aufgabevorrichtung erheblich reduziert, da nach Ablagerung des Förderguts das die Aufgabevorrichtung passierende Fördergut vorzugsweise keinen direkten Kontakt zu den Seitenwänden und / oder dem Boden der Aufgabevorrichtung aufweist.

Eine Förderanlage zum Fördern von Fördergut umfasst nach einem weiteren Aspekt ein Förderband, eine Aufgabevorrichtung zur Aufgabe von Fördergut auf das Förderband, eine Bandanlage, in der das Förderband geführt ist, wobei die Bandanlage eine erste Bandformeinrichtung aufweist, mit der das Förderband bis zum Erreichen der

Aufgabevorrichtung aus einer im Wesentlichen flachen Form in eine U-Form geformt wird, sodass das Fördergut in die U-Form einbringbar ist, und wobei die Bandanlage eine zweite Bandformeinrichtung aufweist, mit der das Förderband in Förderrichtung anschließend zu der Aufgabevorrichtung zu einem geschlossenen Schlauch formbar ist. Die Gestaltung des im Wesentlichen flachen Förderbandes ist bereits zuvor beschrieben worden und auch hierbei anzuwenden. Die Aufgabevorrichtung weist eine Prallfläche auf, die in einem Winkel von etwa 30°-60°, insbesondere 40°-50°, vorzugsweise etwa 45° zur Horizontalen ausgerichtet ist. Bei einer solchen Prallfläche handelt es sich beispielsweise um eine Metallplatte, insbesondere Stahl, wobei die Prallfläche vorzugweise im Wesentlichen eben ausgebildet ist.

Eine solche Prallfläche ermöglicht ebenfalls eine Vororientierung des Förderguts, insbesondere länglicher Materialbrocken (Fische). Dies unterstützt die Ausrichtung der länglichen Materialbrocken im U-förmigen Gurt in Richtung des Förderbandes, wobei die Gefahr von zur Förderrichtung des Förderbandes querstehenden Fördergutbrocken reduziert wird. Eine Ausrichtung der Prallfläche in einem Winkel von etwa 30°-60°, insbesondere 40°-50°, vorzugsweise etwa 45° zur Horizontalen hat sich als besonders günstig für die Ausrichtung der auf der Prallfläche in Richtung des Förderbandes gleitenden Materialbrocken erwiesen, sodass diese optimal in Richtung des Förderbandes ausgerichtet werden.

Gemäß einer ersten Ausführungsform erstreckt sich die Prallfläche in Förderrichtung des Förderbandes. Vorzugsweise erstreckt sich die in Richtung des Förderbandes weisende Kante der Prallfläche parallel zu der Förderrichtung des Förderbandes. Insbesondere erstreckt sich die Aufgabevorrichtung, vorzugsweise der Auffangbereich der Aufgabevorrichtung in Förderrichtung des Förderbandes. Die Prallfläche weist insbesondere in Richtung des Förderbandes einen Neigungswinkel zur Horizontalen von 30°-60, vorzugsweise 40°- 50°, höchstvorzugshalber 45° auf und verläuft oberhalb des Förderbandes im Wesentlichen parallel zu diesem. Dies ermöglicht eine optimale Vororientierung des Fördergutes entsprechend der Ebene der Prallfläche. Insbesondere verläuft die Projektion der Falllinie des sich entlang der Prallfläche bewegenden Materials in etwa senkrecht zu der Erstreckung des Förderbandes.

Die Aufgabevorrichtung umfasst gemäß einer weiteren Ausführungsform eine Schurre, wobei die Prallfläche in der Schurre angeordnet ist. Unter einer Schurre ist ein Mittel zum gerichteten Transport des Förderguts mittels Schwerkraft zu verstehen. Beispielsweise umfasst eine Schurre eine Rutsche, eine Schütte, ein Fallrohr oder einen Trichter.

Gemäß einer weiteren Ausführungsform ist die Prallfläche in Richtung des Förderbandes geneigt angeordnet, sodass Fördergut von der Prallfläche, insbesondere direkt, auf das Förderband geleitet wird. Im Anschluss an die Prallfläche wird das Fördergut beispielsweise direkt in den U-förmigen Abschnitt des Förderbandes geleitet. Weitere Elemente zwischen der Prallfläche und dem Förderband sind vorzugsweise nicht angeordnet.

Zwischen der Prallfläche und dem Förderband ist gemäß einer weiteren Ausführungsform ein Leitelement angeordnet, sodass Fördergut von der Prallfläche auf das Leitelement geleitet wird. Das Leitelement ist beispielsweise plattenförmig ausgebildet und an dem förderbandseitigen Ende der Prallfläche angebracht. Von dem Leitelement gelangt das Fördergut, vorzugsweise direkt, auf das Förderband.

Gemäß einer weiteren Ausführungsform ist das Leitelement derart ausgebildet, dass entlang des Leitelements gleitendes Fördergut in Förderrichtung des Förderbandes ausgerichtet und vorzugsweise umgelenkt wird. Das Leitelement weist vorzugsweise Leitschaufeln oder Auswölbungen auf, die eine Ausrichtung des Förderguts in Förderrichtung des Förderbandes bewirken. Beispielsweise beschreiben die Leitschaufeln oder Auswölbungen im Wesentlichen eine Teilkreisform, vorzugsweise eine Viertelkreisform. Ein solches Leitelement bewirkt eine Reduktion der Relativgeschwindigkeit des Förderbandes und des Fördergutes beim Auftreffen des Fördergutes auf das Förderband. Dadurch werden der Verschleiß und die Belastung des Förderbandes verringert.

Gemäß einer weiteren Ausführungsform weist das Leitelement einen Neigungswinkel auf, der in etwa dem Neigungswinkel der Prallfläche entspricht. Das Leitelement bildet insbesondere eine Verlängerung der Prallfläche, wobei die Vororientierung des Förderguts optimiert wird. Insbesondere ist das Leitelement im Wesentlichen parallel zu der Prallfläche ausgerichtet.

Insbesondere ist die Prallfläche aus einem Gutbettverschleißschutz gebildet.

Die Erfindung umfasst des Weiteren ein Verfahren zum Betrieb einer Förderanlage zum Fördern von Fördergut, wobei die Förderanlage ein Förderband, eine Aufgabevorrichtung zur Aufgabe von Fördergut auf das Förderband und eine Bandanlage, in der das Förderband geführt ist, mit einer ersten Bandformeinrichtung zum Formen des Förderbandes aufweist, wobei das Förderband bis zum Erreichen der Aufgabevorrichtung aus einer im Wesentlichen flachen Form in eine U-Form und in Förderrichtung anschließend zu der Aufgabevorrichtung mit einer zweiten Bandformeinrichtung zu einem geschlossenen Schlauch geformt wird. Das Fördergut fällt in einen Auffangbereich der Aufgabevorrichtung, lagert sich in dem Auffangbereich an und bildet eine Prallfläche aus, auf die Fördergut aufgegeben wird. Die U-Form weist in Förderrichtung einen zur Förderrichtung konstanten Querschnitt auf.

Die Erfindung umfasst des Weiteren ein Verfahren zum Betrieb einer Förderanlage zum Fördern von Fördergut, wobei die Förderanlage ein Förderband, eine Aufgabevorrichtung zur Aufgabe von Fördergut auf das Förderband und eine Bandanlage, in der das Förderband geführt ist, mit einer ersten Bandformeinrichtung zum Formen des Förderbandes aufweist, wobei das Förderband bis zum Erreichen der Aufgabevorrichtung aus einer im Wesentlichen flachen Form in eine U-Form und in Förderrichtung anschließend zu der Aufgabevorrichtung mit einer zweiten Bandformeinrichtung zu einem geschlossenen Schlauch geformt wird. Das Fördergut fällt auf eine in der Aufgabevorrichtung angeordnete Prallfläche, wobei die Prallfläche einen Winkel von etwa 30°-60°, insbesondere 40°-50°, vorzugsweise etwa 45° zur Horizontalen aufweist. Die U-Form weist in Förderrichtung einen zur Förderrichtung konstanten Querschnitt auf.

Gemäß einer Ausführungsform gleitet das Fördergut über die Prallfläche und wird beim Auftreffen auf das Förderband in Förderrichtung des Förderbandes ausgerichtet.

Die mit Bezug auf die Förderanlage beschriebenen Vorteile treffen in verfahrensmäßiger Entsprechung auf das Verfahren zum Betrieb einer Förderanlage zu.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Förderanlage in einer Seitenansicht gemäß einem Ausführungsbeispiel;
- Fig. 2: zeigt eine schematische Darstellung einer Förderanlage in einer Seitenansicht gemäß einem weiteren Ausführungsbeispiel;
- Fig. 3: zeigt eine schematische Darstellung einer Förderanlage in einer weiteren Seitenansicht gemäß einem Ausführungsbeispiel;
- Fig. 4: zeigt eine schematische Darstellung einer Förderanlage in einer Seitenansicht gemäß einem weiteren Ausführungsbeispiel;
- Fig. 5: zeigt eine schematische Darstellung einer Förderanlage in einer Seitenansicht gemäß einem weiteren Ausführungsbeispiel;
- Fig. 6: zeigt eine schematische Darstellung einer Förderanlage in einer Draufansicht gemäß einem Stand der Technik;
- Fig. 7: zeigt eine Schnittdarstellung der Schnittebene A - A der Förderanlage gemäß Fig. 6;
- Fig. 8: zeigt eine Schnittdarstellung der Schnittebene B - B der Förderanlage gemäß Fig. 6;
- Fig. 9: zeigt eine schematische Darstellung einer Förderanlage in einer Draufansicht gemäß einem weiteren Stand der Technik;
- Fig. 10: zeigt eine Schnittdarstellung der Schnittebene C - C der Förderanlage gemäß Fig. 9;
- Fig. 11: zeigt eine Schnittdarstellung der Schnittebene D - D der Förderanlage gemäß Fig. 9;
- Fig. 12: zeigt eine schematische Darstellung einer Förderanlage in einer Draufansicht nach einer allgemein erfindungsgemäßen Ausführungsform;
- Fig. 13: zeigt eine Schnittdarstellung der Schnittebene E - E der Förderanlage gemäß Fig. 12;
- Fig. 14: zeigt eine Schnittdarstellung der Schnittebene F - F der Förderanlage gemäß Fig. 12 und
- Fig. 15: zeigt eine Schnittdarstellung der Schnittebene G - G der Förderanlage gemäß Fig. 12.

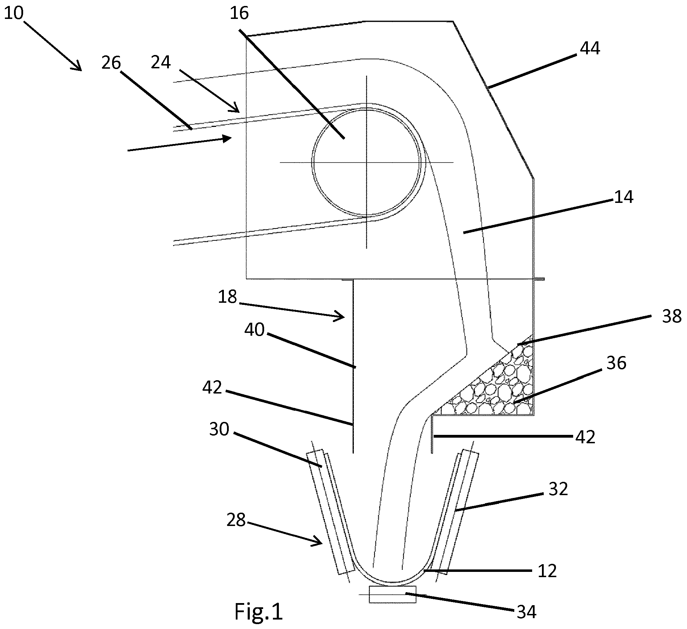

In Fig. 1 zeigt eine Förderanlage 10 zum Fördern von Fördergut 14. Die Förderanlage 10 umfasst eine erste Fördereinrichtung 24 mit einem Fördergurt 26 und einer Umlenktrommel 16, über welche der Fördergurt 26 geführt ist und in einem Winkel von etwa 360° umgelenkt wird. Die Förderrichtung des Fördergurtes 26 der ersten Fördereinrichtung 24 ist mit einem Pfeil gekennzeichnet. Unterhalb der ersten Fördereinrichtung 24 ist eine zweite Fördereinrichtung 28 angeordnet, die ein Förderband 12 und eine Bandanlage 48 aufweist, in der das Förderband 12 geführt ist. Die zweite Fördereinrichtung 28 weist eine Förderrichtung auf, die sich im Wesentlichen horizontal und orthogonal zu der Förderrichtung der ersten Fördereinrichtung 24 erstreckt. Die zweite Fördereinrichtung 28 ist unterhalb des Abwurfendes der ersten Fördereinrichtung 24 angeordnet, wobei das Abwurfende durch die Umlenktrommel 16 gebildet ist. Oberhalb des Abwurfendes ist eine Haube 44 angebracht, welche die Oberseite der Umlenktrommel 16 zumindest teilweise umgibt.

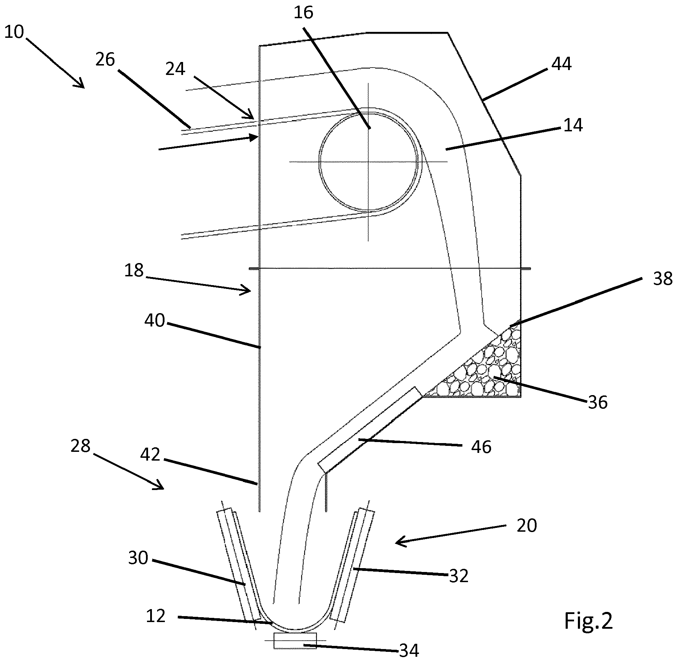

Die Bandanlage 48 zur Führung des Förderbandes 12 der zweiten Fördereinrichtung 28 umfasst eine Mehrzahl von in Förderrichtung der zweiten Fördereinrichtung 28 hintereinander angeordneten Bandformeinrichtungen 20, 21. In der in Fig. 1 und 2 dargestellten Ansicht der Förderanlage 10 ist lediglich eine erste Bandformeinrichtung 20 gezeigt, wobei jede Bandformeinrichtung 20, 21 beispielhaft zumindest drei Rollen 30, 32, 34 aufweist. Die Rollen sind derart relativ zueinander angeordnet, dass das auf den Rollen 30, 32, 34 aufliegenden Förderband zu einem U geformt wird.

Die Bandanlage 48 der zweiten Fördereinrichtung 28 ist dazu ausgebildet, das Förderband 12 aus einer im Wesentlichen flachen Form zu einem Schlauch zu formen. Eine im Wesentlichen flache Form des Förderbandes 12 bedeutet vorliegend, dass das Förderband 12 geringe Wölbungen aufweisen kann. Dies liegt zum einen daran, dass das Förderband 12 von einer nicht dargestellten Bandumlenktrommel 17 kommend einen fließenden Verlauf zu der ersten Bandformeinrichtung 20 aufweist. Zum anderen daran, dass der Mittenbereich der Bandumlenktrommel 17 einen geringfügig anderen Durchmesser als der Randbereich haben kann. Idealerweise ist das Förderband 12 vollständig flach, wenn es von der Bandumlenktrommel 17 umgelenkt und zur ersten Bandformeinrichtung 20 geführt wird. Dazu wird das Förderband 12 über die Erstreckung der zweiten Fördereinrichtung 28 mittels der ersten Bandformeinrichtung 20 zunächst zu einem U und anschließend mittels einer zweiten Bandformeinrichtung 21 zu einem geschlossenen Förderschlauch geformt, wobei das Fördergut innerhalb des Förderschlauchs angeordnet ist. Der Bereich der zweiten Fördereinrichtung 28 der unterhalb des Abwurfendes der ersten Fördereinrichtung 24 angeordnet ist, weist ein Förderband 12 auf, das U-förmig ausgebildet ist. In der weiteren Erstreckung der zweiten Fördereinrichtung 28 wird das Förderband 12 zu einem geschlossenen Schlauchförderband geformt. Der Bereich, in dem das Förderband 12 eine Schlauchform aufweist ist in der Fig. 1 und 2 nicht dargestellt. Beispielsweise weist in dem Bereich, in dem das Förderband 12 eine Schlauchform aufweist, die zweite Bandformeinrichtung 21 vier Rollen auf, die vorzugsweise umfangsmäßig gleichmäßig zueinander beabstandet um den Förderschlauch 12 angeordnet sind. Erfindungsgemäß sind zumindest drei Rollen notwendig, wobei die Anordnung variiert werden kann.

Zwischen dem Abwurfende des Fördergurts 26 der ersten Fördereinrichtung 24 ist eine Aufgabevorrichtung 18 angeordnet. Die Aufgabevorrichtung 18 dient der Aufgabe des Förderguts 14 von der ersten Fördereinrichtung 24 auf die zweite Fördereinrichtung 28 und ist derart unterhalb des Abwurfendes der ersten Fördereinrichtung 24 angeordnet, dass Fördergut von dem Abwurfende der ersten Fördereinrichtung 24 in die Aufgabevorrichtung 18 fällt. Unterhalb des Abwurfendes der ersten Fördereinrichtung 24 weist die Aufgabevorrichtung 18 einen Auffangbereich 36 auf. Der Auffangbereich ist so ausgebildet, dass sich Fördergut 14 von der ersten Fördereinrichtung 24 in diesem anlagert. In dem Ausführungsbeispiel der Fig. 1 und 2 weist der Auffangbereich 36 eine Kastenform mit einem rechteckigen Querschnitt auf. Das sich in dem Auffangbereich anlagernde Fördergut bildet eine Prallfläche 38, die von dem Fördergut der ersten Fördereinrichtung 24 beaufschlagbar ist. Die Prallfläche 38 weist einen Winkel zur Horizontalen von etwa 30-60°, insbesondere 40-50°, vorzugsweise etwa 45° auf.

Die Aufgabevorrichtung weist des Weiteren ein Gehäuse 40 auf, in dem der Auffangbereich ausgebildet ist. Im Anschluss an den Auffangbereich schließen sich in Strömungsrichtung des Fördergutes 14 in etwa vertikale Wandelemente 42 an, die mit ihrem unteren Ende in Richtung des Förderbandes 12 weisen. Die Wandelemente 42 dienen im Wesentlichen der Zentrierung der Aufgabevorrichtung über dem U-förmigen Bereich des Förderbandes 12 der zweiten Fördereinrichtung 28.

Im Betrieb der Fördereinrichtung wird das Fördergut 14 von der ersten Fördereinrichtung 24 in Förderrichtung bis zum Abwurfende gefördert und fällt in die Aufgabevorrichtung 18. Innerhalb der Aufgabevorrichtung fällt das Fördergut 14 in den Aufnahmebereich 36 und lagert 14 sich in diesem derart an, dass die Prallfläche 38 ausgebildet wird. Das nachfolgende Fördergut trifft auf die Prallfläche 38 und wird entlang der Prallfläche 38 in Richtung der zweiten Fördereinrichtung 28 geleitet. Insbesondere werden beim Auftreffen auf die Prallfläche 38 und beim Gleiten entlang der Prallfläche 38 längliche Materialbrocken (Fische) vororientiert.

Fig. 2 zeigt eine Förderanlage 10, die im Wesentlichen der Förderanlage 10 der Fig. 1 entspricht mit dem Unterschied, dass in der Aufgabevorrichtung 18 zwischen der Prallfläche 38 und dem U-förmigen Förderband 12 eine Leitelement 46 angeordnet ist. Das Leitelement 46 ist in einem Winkel zur Horizontalen von 30-60°, insbesondere 40-50°, vorzugsweise 45° angeordnet. Das Leitelement 46 weist einen Neigungswinkel auf, der in etwa dem der Prallfläche 38 entspricht. Das Fördergut wird von der Prallfläche 38 direkt auf das Leitelement 46 geleitet und anschließend direkt auf das Förderband aufgegeben. Das Leitelement 46 weist des Weiteren eine Mehrzahl von Leitschaufeln auf, die in der Ansicht der Fig. 2 nicht dargestellt sind. Die Leitschaufeln sind derart auf der Oberfläche des Leitelements 46 angeordnet, dass sie eine Ausrichtung des über das Leitelement 46 gleitenden Förderguts in Förderrichtung des Förderbandes 12 bewirken. Beispielsweise sind die Leitschaufeln in etwa viertelkreisförmig ausgebildet.

Das Leitelement 46 dient insbesondere dazu, das Fördergut 14 in Richtung der Förderrichtung des Förderbandes 12 auszurichten und somit die Relativgeschwindigkeit des Fördergutes 14 und des Förderbandes 12 in Förderrichtung beim Auftreffen des Fördergutes auf das Förderband 12 zu verringern. Dies verringert insbesondere den Verschleiß und die Belastung des Förderbandes 12 beim Auftreffen des Fördergutes auf das Förderband 12.

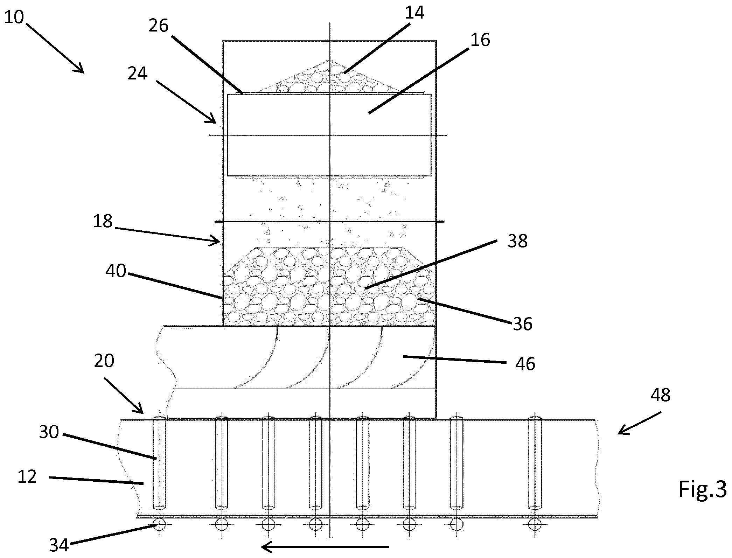

Fig. 3 zeigt die Förderanlage 10 der Fig. 2 in einer weiteren Seitenansicht, wobei die Elemente der Fig. 2 die gleichen Bezugszeichen aufweisen. In der Fig. 3 weist das Leitelement 46 eine Mehrzahl von Leitschaufeln auf, die das Fördergut in Förderrichtung des Förderbandes 12 umlenken. Die Förderrichtung ist in Fig. 3 mit einem Pfeil dargestellt. Die Leitschaufeln sind im Wesentlichen teilkreisförmig ausgebildet und lenken das Fördergut in einem Winkel von etwa 90° um. Bei den Leitschaufeln handelt es sich beispielsweise um Bleche, die teilkreisförmig gebogen sind. Das Leitelement 46 erstreckt sich in dem Ausführungsbeispiels der Fig. 3 seitlich in Förderrichtung über das Gehäuse 40 der Aufgabevorrichtung 18 hinaus. Beispielhaft sind in der Fig. 3 vier solcher Leitschaufeln an dem Leitelement 46 angebracht.

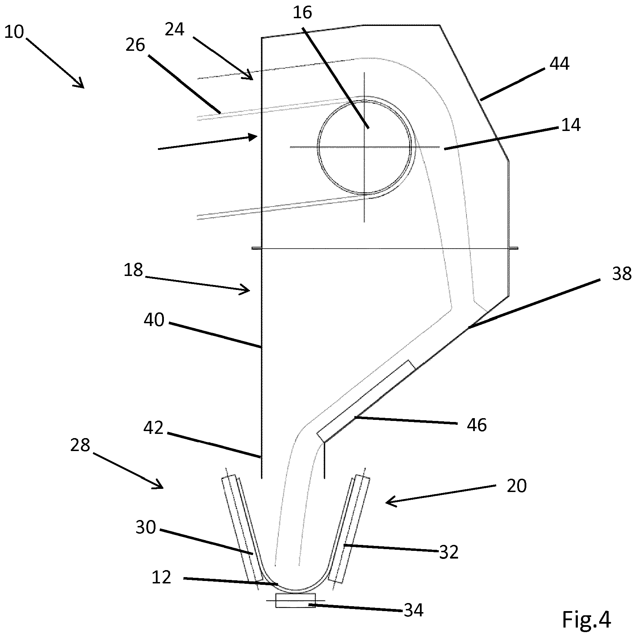

Fig. 4 zeigt ein weiteres Ausführungsbeispiel einer Förderanlage 10, die der Förderanlage 10 der Fig. 1 bis 3 entspricht mit dem Unterschied, dass die Förderanlage 10 der Fig. 4 keinen Auffangbereich 36 aufweist. Die Prallfläche 38 wird von einer Seitenwand des Gehäuses 40 der Aufgabevorrichtung gebildet und ist eine im Wesentlichen ebene Fläche. Die Prallfläche 39 weist einen Winkel zur Horizontalen von 30-60°, insbesondere 40-50°, vorzugsweise 45° auf. An die Prallfläche 38 schließt sich in Fallrichtung des Förderguts 14 das Leitelement 46 an, das im Wesentlichen dem Leitelement 46 der Fig. 2 und 3 entspricht.

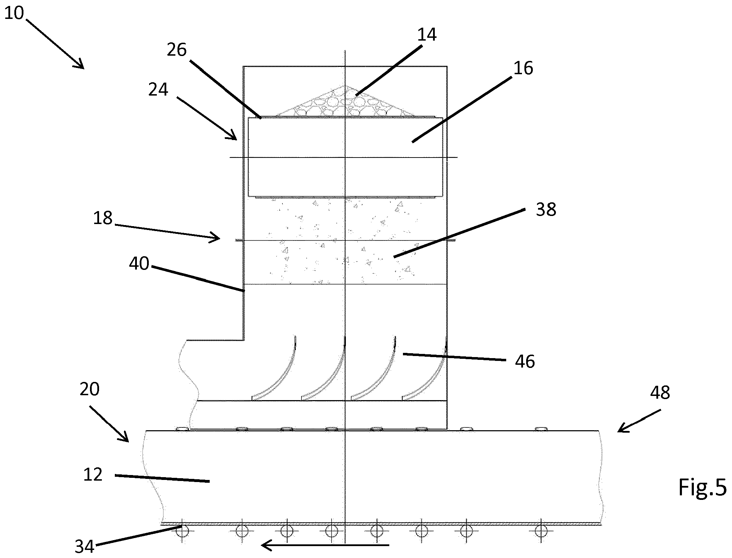

Fig. 5 zeigt eine weitere Ansicht der Förderanlage 10 gemäß Fig. 4, wobei die Förderrichtung des Förderbandes 12 mit einem Pfeil dargestellt ist. In Fig. 5 ist schematisch dargestellt, dass das Fördergut 14 entlang der Prallfläche 38 in Richtung des Förderbandes 12 gleitet. Die Prallfläche 38 erstreckt sich in Richtung des Förderbandes bzw. in Förderrichtung des Förderbandes 12, wobei die dem Förderband 12 zugewandte Kante der Prallfläche 38 im Wesentlichen parallel zu der Förderrichtung verläuft. Die Projektion der Falllinie des auf der Prallfläche 38 gleitenden Förderguts 12 ist in etwa orthogonal zu der Förderrichtung. Im Anschluss an die Prallfläche 38 wird das Fördergut 12 mittels der Leitschaufeln des Leitelements 46 in etwa um 90° in Richtung der Förderrichtung des Förderbandes 12 umgelenkt.

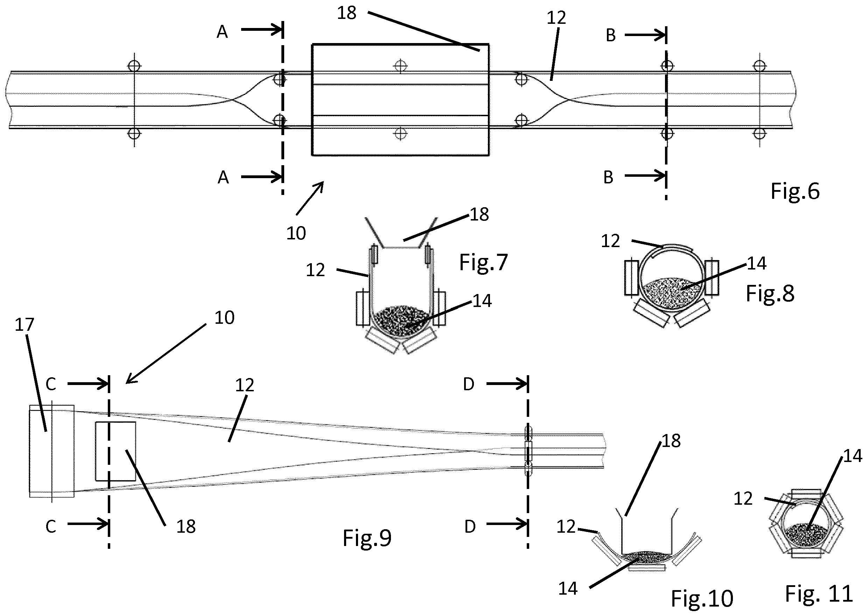

Fig. 6 zeigt eine schematische Darstellung einer Förderanlage 10 in einer Draufansicht gemäß einem Stand der Technik. Dabei ist das Förderband 12 der Förderanlage 10 in Querrichtung so biegsam und krümmungserzeugend vorgespannt, dass bei der trogförmigen Krümmung des mittleren Bereiches die beiden Randbereiche von selbst eingeschlagen liegen. Das als geschlossener Förderschlauch ausgebildete Förderband 12 wird in eine U-Form geöffnet, indem Spreizelemente der Bandanlage an der zum Fördergut 14 weisenden Innenfläche des Förderbandes eingreifen und die Innenfläche aufspannen. Ohne diese Spreizelemente ist das Aufspannen wegen der Vorspannung des Förderbandes 12 nicht möglich. Dieser Schritt ist in Fig. 7 als Schnittdarstellung der Schnittebene A - A der Förderanlage gemäß Fig. 6 dargestellt. Das Fördergut 14 wird mittels einer Aufgabevorrichtung 18 von der nach oben offenen Seite des U-förmigen Förderbandes 12 eingegeben. Anschließend schließt sich das Förderband vollumfänglich zu dem Förderschlauch. Dies zeigt Fig. 8 als Schnittdarstellung der Schnittebene B - B der Förderanlage gemäß Fig. 6.

Fig. 9 zeigt eine schematische Darstellung einer Förderanlage 10 in einer Draufansicht gemäß einem weiteren Stand der Technik. Die Förderanlage 10 weist ein Förderband 12 auf, das von einer Bandumlenktrommel 17 kommend zunehmend eine U-Form und an einer ersten Bandformeinrichtung letztlich eine geschlossene Förderschlauchform einnimmt. In dem Bereich der U-Form wird Fördergut 14 mittels einer Aufgabevorrichtung 18 auf das Förderband 12 aufgegeben. Fig. 10 zeigt eine Schnittdarstellung der Schnittebene C - C der Förderanlage10 gemäß Fig. 9, wobei das Fördergut 14 wie vorgenannt auf das Fördergut 12 aufgegeben wird. Fig. 11 zeigt eine Schnittdarstellung der Schnittebene D - D der Förderanlage 10 gemäß Fig. 9, wobei das Förderband 12 eine geschlossene und mit Fördergut 14 befüllte Förderschlauchform aufweist. Dabei ist das Förderband 12 umfangsgemäß von Rollen umgeben.

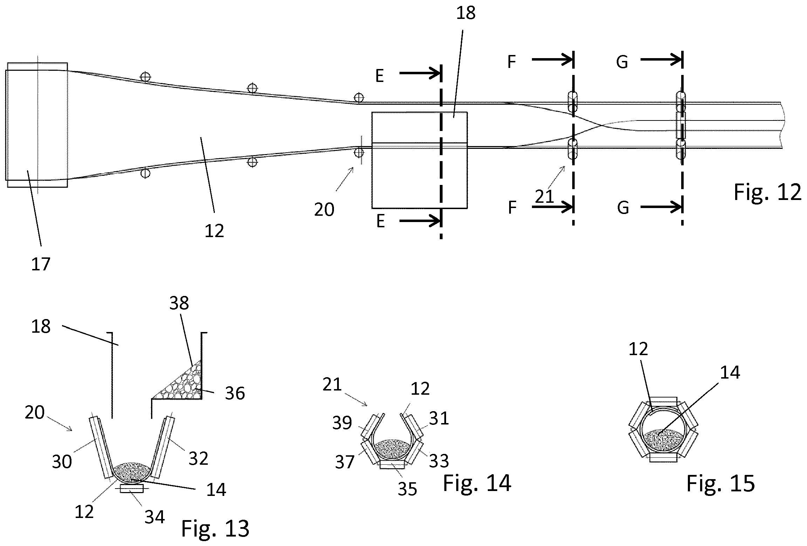

Fig. 12 zeigt eine schematische Darstellung einer allgemein erfindungsgemäßen Ausführungsform einer Förderanlage 10 in einer Draufansicht. Das Förderband 12 weist von einer Bandumlenktrommel 17 kommend einen U-förmig werdenden, fließenden Verlauf zu einer ersten Bandformeinrichtung 20 auf. Die Bandformeinrichtung 20 formt das Förderband 12 mithilfe von drei Rollen 30, 32, 34 derart, dass es im weiteren Verlauf einen konstanten Querschnitt aufweist. In diesen Bereich des konstanten Querschnitts wird mittels einer Aufgabevorrichtung 18 Fördergut 14 in die U-Form aufgegeben. Die Aufgabe des Förderguts 12 ist in Fig. 13 als Schnittdarstellung der Schnittebene E - E der Förderanlage 10 dargestellt. Das u-förmigen Förderbandes 12 mithilfe von Rollen 31, 33, 35, 37, 39 einer zweiten Bandformeinrichtung 21 in eine geschlossene Schlauchform gebracht. Die beginnende Schließung des u-förmigen Förderbandes 12 ist in der Schnittebene F - F der Förderanlage 10 in Fig. 14 dargestellt. Fig. 15 zeigt die geschlossene Schlauchform des Förderbandes 12 als Schnittdarstellung der Schnittebene G - G der Förderanlage 10.

Weiterhin ist unter anderem in den Fig. 12 und 13 ist dargestellt, dass die U-Form in Förderrichtung einen zur Förderrichtung konstanten Querschnitt aufweist. Weiterhin ist die U-Form mit zwei Schenkeln und einer die Schenkel verbindenden Basis derart gebildet, dass die Schenkel im Querschnitt des Förderbandes einen spitzen Winkel zueinander aufweisen, wobei die Basis den Winkelscheitel umfasst.

### Bezugszeichenliste

- 10: Förderanlage
- 12: Förderband (Schlauchförderband)
- 14: Fördergut
- 16: Umlenktrommel
- 17: Bandumlenktrommel
- 18: Aufgabevorrichtung
- 20: erste Bandformeinrichtung
- 21: zweite Bandformeinrichtung
- 22: Prallfläche
- 24: erste Fördereinrichtung
- 26: Fördergurt
- 28: zweite Fördereinrichtung
- 30: Rolle der ersten Bandformeinrichtung
- 31: Rolle der zweiten Bandformeinrichtung
- 32: Rolle der ersten Bandformeinrichtung
- 33: Rolle der zweiten Bandformeinrichtung
- 34: Rolle der ersten Bandformeinrichtung
- 35: Rolle der zweiten Bandformeinrichtung
- 36: Auffangbereich
- 37: Rolle der zweiten Bandformeinrichtung
- 38: Prallfläche
- 39: Rolle der zweiten Bandformeinrichtung
- 40: Gehäuse
- 42: Wandelemente
- 44: Haube
- 46: Leitelement
- 48: Bandanlage

## Patentansprüche

1. Förderanlage (10) zum Fördern von Fördergut (14) aufweisend,
ein Förderband (12),
eine Aufgabevorrichtung (18) zur Aufgabe von Fördergut (14) auf das Förderband (12),
eine Bandanlage (48), in der das Förderband (12) geführt ist, wobei die Bandanlage (48) eine erste Bandformeinrichtung (20) aufweist, mit der das Förderband (12) bis zum Erreichen der Aufgabevorrichtung (18) aus einer im Wesentlichen flachen Form in eine U-Form geformt wird, sodass das Fördergut (14) in die U-Form einbringbar ist, und wobei die Bandanlage (48) eine zweite Bandformeinrichtung (21) aufweist, mit der das Förderband (12) in Förderrichtung anschließend zu der Aufgabevorrichtung (18) zu einem geschlossenen Schlauch formbar ist, wobei jede Bandformeinrichtung (20, 21) zumindest drei das Förderband (12) formende Rollen (30, 31, 32, 33, 34, 35, 37, 39) aufweist, wobei die Rollen (30, 31, 32, 33, 34, 35, 37, 39) an der zum Fördergut (14) abgewandten Fläche des Förderbandes (12) angeordnet sind, **dadurch gekennzeichnet, dass**
die U-Form in Förderrichtung einen zur Förderrichtung konstanten Querschnitt aufweist, und dass
die Aufgabevorrichtung (18) mindestens einen Auffangbereich (36) aufweist, der derart ausgebildet ist, dass sich Fördergut (14) in diesem anlagert und eine Prallfläche (38) ausbildet, auf die Fördergut (14) aufgebbar ist.

2. Förderanlage (10) zum Fördern von Fördergut (14) aufweisend,
ein Förderband (12),
eine Aufgabevorrichtung (18) zur Aufgabe von Fördergut (14) auf das Förderband (12),
eine Bandanlage (48), in der das Förderband (12) geführt ist, wobei die Bandanlage (48) eine erste Bandformeinrichtung (20) aufweist, mit der das Förderband (12) bis zum Erreichen der Aufgabevorrichtung (18) aus einer im Wesentlichen flachen Form in eine U-Form geformt wird, sodass das Fördergut (14) in die U-Form einbringbar ist, und wobei die Bandanlage (48) eine zweite Bandformeinrichtung (21) aufweist, mit der das Förderband (12) in Förderrichtung anschließend zu der Aufgabevorrichtung (18) zu einem geschlossenen Schlauch formbar ist, wobei jede Bandformeinrichtung (20, 21) zumindest drei das Förderband (12) formende Rollen (30, 31, 32, 33, 34, 35, 37, 39) aufweist, wobei die Rollen (30, 31, 32, 33, 34, 35, 37, 39) an der zum Fördergut (14) abgewandten Fläche des Förderbandes (12) angeordnet sind, und
wobei die Aufgabevorrichtung (18) eine Prallfläche (38) aufweist, auf die Fördergut (14) aufgebbar ist, wobei die Prallfläche einen Winkel von etwa 30°-60°, insbesondere 40°-50°, vorzugsweise etwa 45° zur Horizontalen aufweist **dadurch gekennzeichnet, dass**
die U-Form in Förderrichtung einen zur Förderrichtung konstanten Querschnitt aufweist.

3. Förderanlage (10) nach Anspruch 1 oder 2, wobei die zweite
Bandformeinrichtung (21) mindestens drei Rollen, bevorzugt vier oder fünf Rollen (31, 33, 35, 37, 39), besonders bevorzugt sechs Rollen aufweist.

4. Förderanlage (10) nach einem der vorangehenden Ansprüche, wobei ausschließlich die an der zum Fördergut (14) abgewandten Fläche des Förderbandes (12) angeordneten Rollen (30, 31, 32, 33, 34, 35, 37, 39) das Förderband (12) formen.

5. Förderanlage (10) nach einem der vorangehenden Ansprüche, wobei sich die Prallfläche (38) in Förderrichtung des Förderbandes (12) erstreckt.

6. Förderanlage (10) nach einem der vorangehenden Ansprüche, wobei die Aufgabevorrichtung (18) eine Schurre umfasst und die Prallfläche (38) in der Schurre angeordnet ist.

7. Förderanlage (10) nach einem der vorangehenden Ansprüche, wobei die Prallfläche (38) in Richtung des Förderbandes (12) geneigt angeordnet ist, sodass Fördergut (14) von der Prallfläche (38), insbesondere direkt, auf das Förderband (12) geleitet wird.

8. Förderanlage (10) nach einem der vorangehenden Ansprüche, wobei zwischen der Prallfläche (38) und dem Förderband (12) ein Leitelement (46) angeordnet ist, sodass Fördergut (14) von der Prallfläche (38) auf das Leitelement (46) geleitet wird.

9. Förderanlage (10) nach Anspruch 8, wobei das Leitelement (46) derart ausgebildet ist, dass entlang des Leitelements (46) gleitendes Fördergut (14) in Förderrichtung des Förderbandes (12) ausgerichtet wird.

10. Förderanlage (10) nach einem der Ansprüche 8 oder 9, wobei das Leitelement (46) einen Neigungswinkel aufweist, der in etwa dem Neigungswinkel der Prallfläche (38) entspricht.

11. Verfahren zum Betrieb einer Förderanlage (10) zum Fördern von Fördergut (14), wobei die Förderanlage (10) ein Förderband (12), eine Aufgabevorrichtung (18) zur Aufgabe von Fördergut (14) auf das Förderband (12) und eine Bandanlage (48), in der das Förderband (12) geführt ist, mit einer ersten Bandformeinrichtung (20) zum Formen des Förderbandes (12) aufweist,
wobei das Förderband (12) bis zum Erreichen der Aufgabevorrichtung (18) aus einer im Wesentlichen flachen Form in eine U-Form und in Förderrichtung anschließend zu der Aufgabevorrichtung (18) mit einer zweiten Bandformeinrichtung (21) zu einem geschlossenen Schlauch geformt wird, **dadurch gekennzeichnet, dass**
die U-Form in Förderrichtung einen zur Förderrichtung konstanten Querschnitt aufweist, und dass
das Fördergut (14) in einen Auffangbereich (36) der Aufgabevorrichtung (18) fällt, sich in dem Auffangbereich (36) anlagert und eine Prallfläche (38) ausbildet, auf die Fördergut (14) aufgegeben wird.

12. Verfahren zum Betrieb einer Förderanlage (10) zum Fördern von Fördergut (14), wobei die Förderanlage (10) ein Förderband (12), eine Aufgabevorrichtung (18) zur Aufgabe von Fördergut (14) auf das Förderband (12) und eine Bandanlage (48), in der das Förderband (12) geführt ist, mit einer ersten Bandformeinrichtung (20) zum Formen des Förderbandes (12) aufweist,
wobei das Förderband (12) bis zum Erreichen der Aufgabevorrichtung (18) aus einer im Wesentlichen flachen Form in eine U-Form und in Förderrichtung anschließend zu der Aufgabevorrichtung (18) mit einer zweiten Bandformeinrichtung (21) zu einem geschlossenen Schlauch geformt wird, wobei das Fördergut (14) auf eine in der Aufgabevorrichtung (18) angeordnete Prallfläche aufgegeben wird, wobei die Prallfläche einen Winkel von etwa 30°-60°, insbesondere 40°-50°, vorzugsweise etwa 45° zur Horizontalen aufweist, **dadurch gekennzeichnet, dass**
die U-Form in Förderrichtung einen zur Förderrichtung konstanten Querschnitt aufweist.

13. Verfahren nach Anspruch 11 oder 12, wobei das Fördergut (14) über die Prallfläche (38) gleitet und beim Auftreffen auf das Förderband (12) in Förderrichtung des Förderbandes (12) ausgerichtet wird.

## Claims

1. Conveying installation (10) for conveying material to be conveyed (14), having
a conveyor belt (12),
a feeding apparatus (18) for feeding material to be conveyed (14) onto the conveyor belt (12),
a belt installation (48) in which the conveyor belt (12) is guided, wherein the belt installation (48) has a first belt-shaping device (20), by way of which the conveyor belt (12) is shaped from a substantially flat shape into a U shape until the feeding apparatus (18) is reached, so that the material to be conveyed (14) is able to be introduced into the U shape, and wherein the belt installation (48) has a second belt-shaping device (21), by way of which the conveyor belt (12) is able to be shaped into a closed tube in the conveying direction after the feeding apparatus (18), wherein each belt-shaping device (20, 21) has at least three rollers (30, 31, 32, 33, 34, 35, 37, 39) shaping the conveyor belt (12), wherein the rollers (30, 31, 32, 33, 34, 35, 37, 39) are arranged on that surface of the conveyor belt (12) which faces away from the material to be conveyed (14),
**characterized in that**,
in the conveying direction, the U shape has a cross section which is constant in relation to the conveying direction, and **in that**
the feeding apparatus (18) has at least one collecting region (36), which is configured in such a way that material to be conveyed (14) accumulates therein and forms an impact surface (38) onto which material to be conveyed (14) is able to be fed.

2. Conveying installation (10) for conveying material to be conveyed (14), having
a conveyor belt (12),
a feeding apparatus (18) for feeding material to be conveyed (14) onto the conveyor belt (12),
a belt installation (48) in which the conveyor belt (12) is guided, wherein the belt installation (48) has a first belt-shaping device (20), by way of which the conveyor belt (12) is shaped from a substantially flat shape into a U shape until the feeding apparatus (18) is reached, so that the material to be conveyed (14) is able to be introduced into the U shape, and wherein the belt installation (48) has a second belt-shaping device (21), by way of which the conveyor belt (12) is able to be shaped into a closed tube in the conveying direction after the feeding apparatus (18), wherein each belt-shaping device (20, 21) has at least three rollers (30, 31, 32, 33, 34, 35, 37, 39) shaping the conveyor belt (12), wherein the rollers (30, 31, 32, 33, 34, 35, 37, 39) are arranged on that surface of the conveyor belt (12) which faces away from the material to be conveyed (14),
and
wherein the feeding apparatus (18) has an impact surface (38) onto which material to be conveyed (14) is able to be fed, wherein the impact surface has an angle of approximately 30°-60°, in particular of 40°-50°, preferably of approximately 45° to the horizontal,
**characterized in that**,
in the conveying direction, the U shape has a cross section which is constant in relation to the conveying direction.

3. Conveying installation (10) according to Claim 1 or 2, wherein the second belt-shaping device (21) has at least three rollers, preferably four or five rollers (31, 33, 35, 37, 39), particular preferably six rollers.

4. Conveying installation (10) according to one of the preceding claims, wherein exclusively the rollers (30, 31, 32, 33, 34, 35, 37, 39) arranged on that surface of the conveyor belt (12) which faces away from the material to be conveyed (14) shape the conveyor belt (12).

5. Conveying installation (10) according to one of the preceding claims, wherein the impact surface (38) extends in the conveying direction of the conveyor belt (12).

6. Conveying installation (10) according to one of the preceding claims, wherein the feeding apparatus (18) comprises a chute and the impact surface (38) is arranged in the chute.

7. Conveying installation (10) according to one of the preceding claims, wherein the impact surface (38) is arranged so as to be inclined in the direction of the conveyor belt (12) such that material to be conveyed (14) is directed from the impact surface (38), in particular directly, onto the conveyor belt (12) .

8. Conveying installation (10) according to one of the preceding claims, wherein a directing element (46) is arranged between the impact surface (38) and the conveyor belt (12) such that material to be conveyed (14) is directed from the impact surface (38) onto the directing element (46).

9. Conveying installation (10) according to Claim 8, wherein the directing element (46) is configured in such a way that material to be conveyed (14) sliding along the directing element (46) is oriented in the conveying direction of the conveyor belt (12).

10. Conveying installation (10) according to either of Claims 8 and 9, wherein the directing element (46) has an angle of inclination which corresponds approximately to the angle of inclination of the impact surface (38).

11. Method for operating a conveying installation (10) for conveying material to be conveyed (14), wherein the conveying installation (10) has a conveyor belt (12), a feeding apparatus (18) for feeding material to be conveyed (14) onto the conveyor belt (12), and a belt installation (48) in which the conveyor belt (12) is guided and which has a first belt-shaping device (20) for shaping the conveyor belt (12),
wherein the conveyor belt (12) is shaped from a substantially flat shape into a U shape until the feeding apparatus (18) is reached and is shaped by way of a second belt-shaping device (21) into a closed tube in the conveying direction after the feeding apparatus (18),
**characterized in that**,
in the conveying direction, the U shape has a cross section which is constant in relation to the conveying direction, and **in that**
the material to be conveyed (14) drops into a collecting region (36) of the feeding apparatus (18), accumulates in the collecting region (36) and forms an impact surface (38) onto which material to be conveyed (14) is fed.

12. Method for operating a conveying installation (10) for conveying material to be conveyed (14), wherein the conveying installation (10) has a conveyor belt (12), a feeding apparatus (18) for feeding material to be conveyed (14) onto the conveyor belt (12), and a belt installation (48) in which the conveyor belt (12) is guided and which has a first belt-shaping device (20) for shaping the conveyor belt (12), wherein the conveyor belt (12) is shaped from a substantially flat shape into a U shape until the feeding apparatus (18) is reached and is shaped by way of a second belt-shaping device (21) into a closed tube in the conveying direction after the feeding apparatus (18), wherein the material to be conveyed (14) is fed onto an impact surface which is arranged in the feeding apparatus (18), wherein the impact surface has an angle of approximately 30°-60°, in particular of 40°-50°, preferably of approximately 45° to the horizontal,
**characterized in that**,
in the conveying direction, the U shape has a cross section which is constant in relation to the conveying direction.

13. Method according to Claim 11 or 12, wherein the material to be conveyed (14) slides over the impact surface (38) and, upon impact on the conveyor belt (12), is oriented in the conveying direction of the conveyor belt (12).

## Revendications

1. Installation de transport (10) destinée à transporter une matière à transporter (14) présentant
une bande transporteuse (12),
un dispositif d'alimentation (18) destiné à alimenter une matière à transporter (14) sur la bande transporteuse (12),
une installation à bande (48), dans laquelle la bande transporteuse (12) est guidée, l'installation à bande (48) présentant un premier dispositif de façonnage de bande (20) qui façonne la bande transporteuse (12), jusqu'à ce qu'elle atteigne le dispositif d'alimentation (18), à partir d'une forme sensiblement plane en une forme en U, de telle sorte que la matière à transporter (14) peut être introduite dans la forme en U et l'installation à bande (48) présentant un deuxième dispositif de façonnage de bande (21) qui permet de façonner la bande transporteuse (12), dans le sens de transport, après le dispositif d'alimentation (18), en un tuyau fermé, chaque dispositif de façonnage de bande (20, 21) présentant au moins trois galets (30, 31, 32, 33, 34, 35, 37, 39) façonnant la bande transporteuse (12), les galets (30, 31, 32, 33, 34, 35, 37, 39) étant agencés au niveau de la surface opposée à la matière à transporter (14) de la bande transporteuse (12), **caractérisée**
**en ce que** la forme en U présente, dans le sens de transport, une section constante par rapport au sens de transport et en ce que le dispositif d'alimentation (18) présente au moins une zone de réception (36) qui est conçue de manière telle que la matière à transporter (14) s'accumule dans celle-ci et forme une surface d'impact (38) sur laquelle la matière à transporter (14) peut être alimentée.

2. Installation de transport (10) destinée à transporter une matière à transporter (14) présentant
une bande transporteuse (12),
un dispositif d'alimentation (18) destiné à alimenter une matière à transporter (14) sur la bande transporteuse (12),
une installation à bande (48), dans laquelle la bande transporteuse (12) est guidée, l'installation à bande (48) présentant un premier dispositif de façonnage de bande (20) qui façonne la bande transporteuse (12), jusqu'à ce qu'elle atteigne le dispositif d'alimentation (18), à partir d'une forme sensiblement plane en une forme en U, de telle sorte que la matière à transporter (14) peut être introduite dans la forme en U et l'installation à bande (48) présentant un deuxième dispositif de façonnage de bande (21) qui permet de façonner la bande transporteuse (12), dans le sens de transport, après le dispositif d'alimentation (18), en un tuyau fermé, chaque dispositif de façonnage de bande (20, 21) présentant au moins trois galets (30, 31, 32, 33, 34, 35, 37, 39) façonnant la bande transporteuse (12), les galets (30, 31, 32, 33, 34, 35, 37, 39) étant agencés au niveau de la surface opposée à la matière à transporter (14) de la bande transporteuse (12) et le dispositif d'alimentation (18) présentant une surface d'impact (38) sur laquelle la matière à transporter (14) peut être alimentée, la surface d'impact présentant un angle d'environ 30°-60°, en particulier de 40°-50°, de préférence d'environ 45° par rapport à l'horizontale, **caractérisée**
**en ce que** la forme en U présente, dans le sens de transport, une section constante par rapport au sens de transport.

3. Installation de transport (10) selon la revendication 1 ou 2, le deuxième dispositif de façonnage de bande (21) présentant au moins trois galets, de préférence quatre ou cinq galets (31, 33, 35, 37, 39), de manière particulièrement préférée six galets.

4. Installation de transport (10) selon l'une des revendications précédentes, seuls les galets (30, 31, 32, 33, 34, 35, 37, 39) agencés au niveau de la face opposée à la matière à transporter (14) de la bande transporteuse (12) façonnant la bande transporteuse (12).

5. Installation de transport (10) selon l'une des revendications précédentes, la surface d'impact (38) s'étendant dans le sens de transport de la bande transporteuse (12).

6. Installation de transport (10) selon l'une des revendications précédentes, le dispositif d'alimentation (18) comprenant une trémie et la surface d'impact (38) étant agencée dans la trémie.

7. Installation de transport (10) selon l'une des revendications précédentes, la surface d'impact (38) étant agencée de manière inclinée vers la bande transporteuse (10), de telle sorte que la matière à transporter (14) est guidée à partir de la surface d'impact (38), en particulier directement, sur la bande transporteuse (12).

8. Installation de transport (10) selon l'une des revendications précédentes, un élément de guidage (46) étant agencé entre la surface d'impact (38) et la bande transporteuse (12), de telle sorte que la matière à transporter (14) est guidée à partir de la surface d'impact (38) sur l'élément de guidage (46).

9. Installation de transport (10) selon la revendication 8, l'élément de guidage (46) étant conçu de manière telle que de la matière à transporter (14) glissant le long de l'élément de guidage (46) est orientée dans le sens de transport de la bande transporteuse (12).

10. Installation de transport (10) selon l'une des revendications 8 ou 9, l'élément de guidage (46) présentant un angle d'inclinaison qui correspond environ à l'angle d'inclinaison de la surface d'impact (38).

11. Procédé pour le fonctionnement d'une installation de transport (10) destinée à transporter d'une matière à transporter (14), l'installation de transport (10) présentant une bande transporteuse (12), un dispositif d'alimentation (18) destiné à alimenter la matière à transporter (14) sur la bande transporteuse (12) et une installation à bande (48), dans laquelle la bande transporteuse (12) est guidée, présentant un premier dispositif de façonnage de bande (20) destiné à façonner la bande transporteuse (12), la bande transporteuse (12) étant façonnée, jusqu'à ce qu'elle atteigne le dispositif d'alimentation (18), à partir d'une forme sensiblement plane en une forme en U et, dans le sens de transport, après le dispositif d'alimentation (18), à l'aide d'un deuxième dispositif de façonnage de bande (21) en un tuyau fermé, **caractérisé**
**en ce que** la forme en U présente, dans le sens de transport, une section constante par rapport au sens de transport et en ce que la matière à transporter (14) tombe dans une zone de réception (36) du dispositif d'alimentation (18), s'accumule dans la zone de réception (36) et forme une surface d'impact (38) sur laquelle la matière à transporter (14) est alimentée.

12. Procédé pour le fonctionnement d'une installation de transport (10) destinée à transporter une matière à transporter (14), l'installation de transport (10) présentant une bande transporteuse (12), un dispositif d'alimentation (18) destiné à alimenter la matière à transporter (14) sur la bande transporteuse (12) et une installation à bande (48), dans laquelle la bande transporteuse (12) est guidée, présentant un premier dispositif de façonnage de bande (20) destiné à façonner la bande transporteuse (12), la bande transporteuse (12) étant façonnée, jusqu'à ce qu'elle atteigne le dispositif d'alimentation (18), à partir d'une forme sensiblement plane en une forme en U et, dans le sens de transport, après le dispositif d'alimentation (18), à l'aide d'un deuxième dispositif de façonnage de bande (21) en un tuyau fermé, la matière à transporter (14) étant alimentée sur une surface d'impact agencée dans le dispositif d'alimentation (18), la surface d'impact présentant un angle d'environ 30°-60°, en particulier de 40°-50°, de préférence d'environ 45° par rapport à l'horizontale, **caractérisé**
**en ce que** la forme en U présente, dans le sens de transport, une section constante par rapport au sens de transport.

13. Procédé selon la revendication 11 ou 12, la matière à transporter (14) glissant sur la surface d'impact (38) et étant orientée dans le sens de transport de la bande transporteuse (12) lorsqu'elle rencontre la bande transporteuse (12) .
